# EUROPEAN PATENT APPLICATION

(11) **EP 4 564 286 A1**
(43) Date of publication of application: **04.06.2025**
(21) Application number: 23846000.0
(22) Date of filing: 31.05.2023
(51) Int. Cl.: G06T 7/00, G06V 10/82

(54) **INSPECTION DEVICE AND METHOD**

(30) Priority: 29.07.2022 JP 2022122335
(71) Applicant: Hitachi Industrial Equipment Systems Co., Ltd., Tokyo 101-0021 (JP)
(72) Inventor: WAKANA, Hironori, Tokyo 100-8280 (JP); NEO, Atsushi, Tokyo 100-8280 (JP); YAMAZAKI, Masahiro, Tokyo 101-0021 (JP); OJIMA, Masayoshi, Tokyo 101-0021 (JP)
(74) Representative: MERH-IP Matias Erny Reichl Hoffmann Patentanwälte PartG mbB
(86) International application number: PCT/JP2023/020364
(87) International publication number: WO 2024/024263

(57) **Abstract**

An encoder model and a decoder model, which are machine learning models, are used for inspection of the inspection target. The encoder model is a model in which inspection target data is input and an abnormality degree of the inspection target is output. The decoder model is a model in which an OK/NG value, which is a value indicating whether the inspection target is normal or abnormal, and a feature amount of data of the inspection target are input, and when the input OK/NG value indicates an abnormality, restored data of the inspection target based on the input feature amount is output.

## Description

### [Technical Field]

The present invention relates generally to inspection of an inspection target, such as products.

### [Background Art]

For example, there is known a method of inspecting a product by using a machine learning model in which inspection target data (for example, photographed image data) is input and an inspection result of the product is output (for example, PTL 1).

### [Citation List]

### [Patent Literature]

[PTL 1] Japanese Patent Application Publication No. 2021-81814

### [Summary of Invention]

### [Technical Problem]

According to PTL 1, there are an encoder model and a decoder model, and all data input to the encoder model is a target of decoding processing that uses the decoder model. Therefore, a processing load is large.

### [Solution to Problem]

An encoder model and a decoder model, which are machine learning models, are used for inspection of the inspection target. The encoder model is a model in which inspection target data is input and an abnormality degree of the inspection target is output. The decoder model is a model in which an OK/NG value, which is a value indicating whether the inspection target is normal or abnormal, and a feature amount of data of the inspection target are input, and when the input OK/NG value indicates an abnormality, restored data of the inspection target based on the input feature amount is output.

### [Advantageous Effects of Invention]

According to the present invention, it is possible to reduce a processing load related to a machine learning model used for inspection of an inspection target.

### [Brief Description of Drawings]

[Fig. 1]

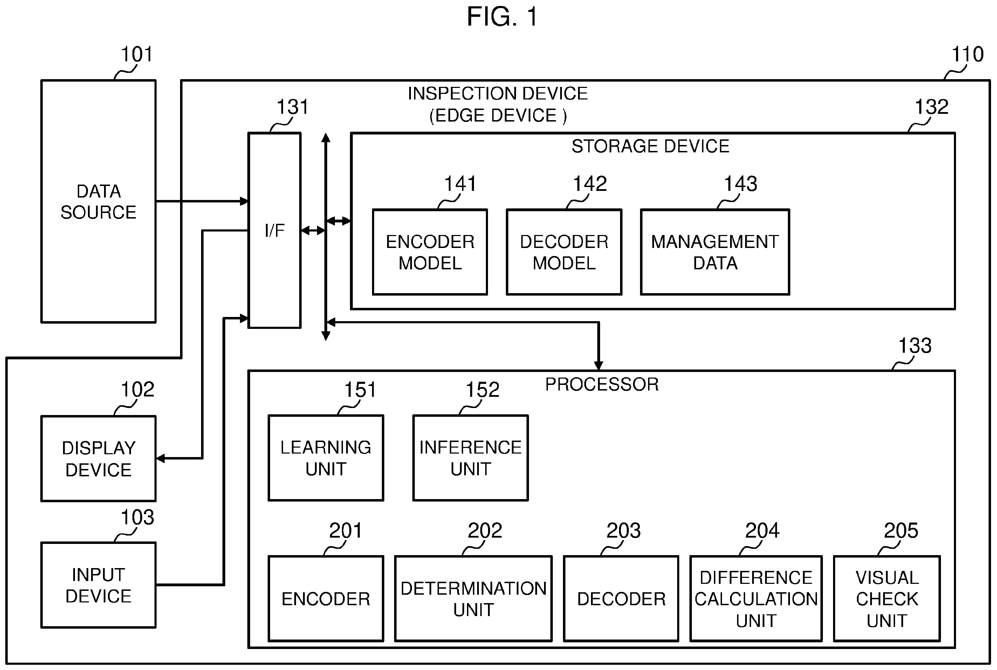

   Fig. 1 illustrates a configuration example of an entire system including an inspection device according to a first embodiment.
[Fig. 2]

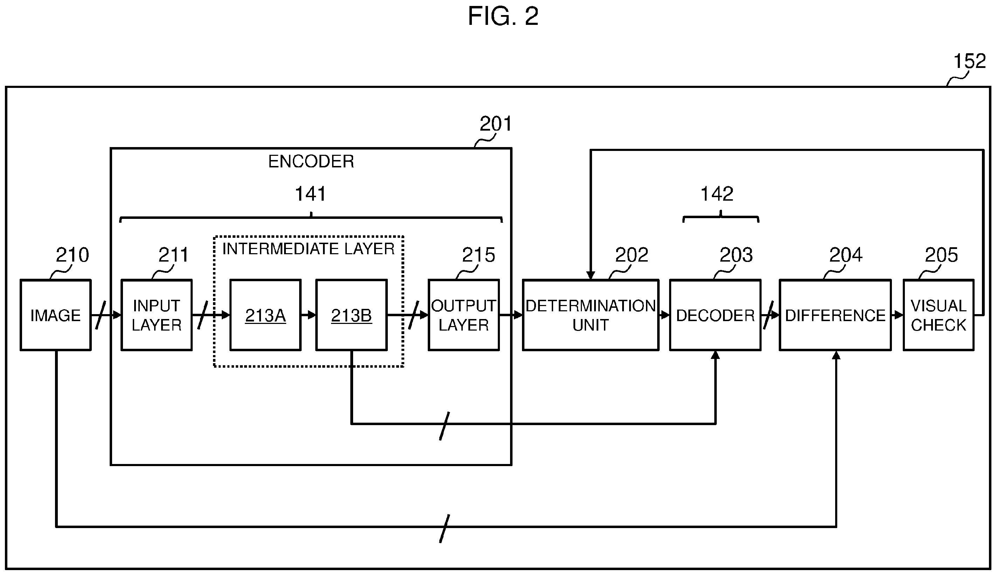

   Fig. 2 illustrates an outline of a flow of inference processing.
[Fig. 3]

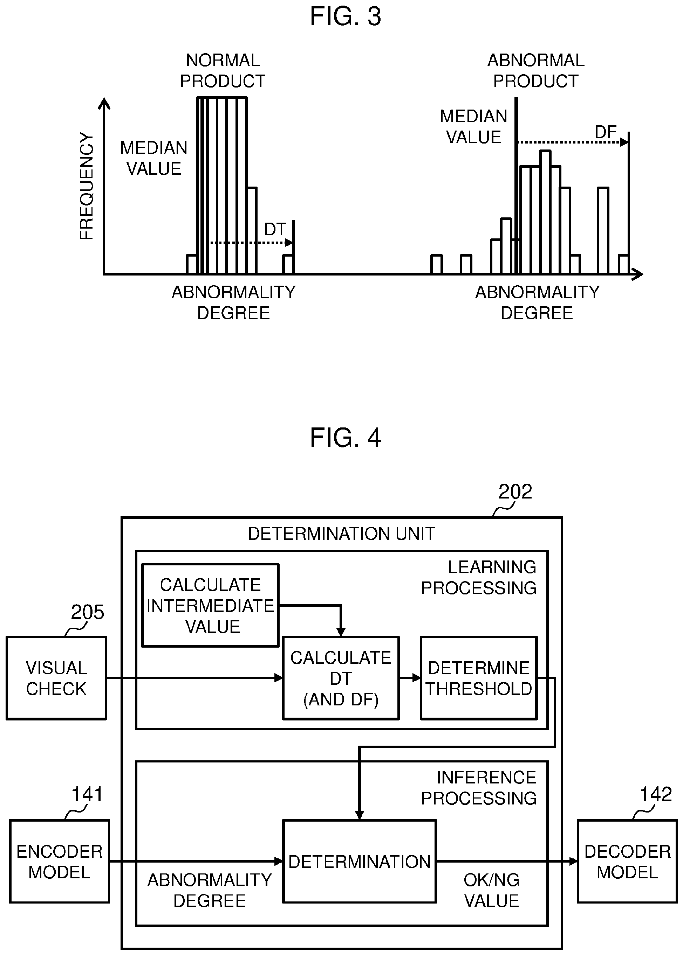

   Fig. 3 illustrates an example of distribution of abnormality degrees of a normal product and an abnormal product.
[Fig. 4]
   Fig. 4 illustrates a processing flow of a determination unit.
[Fig. 5]

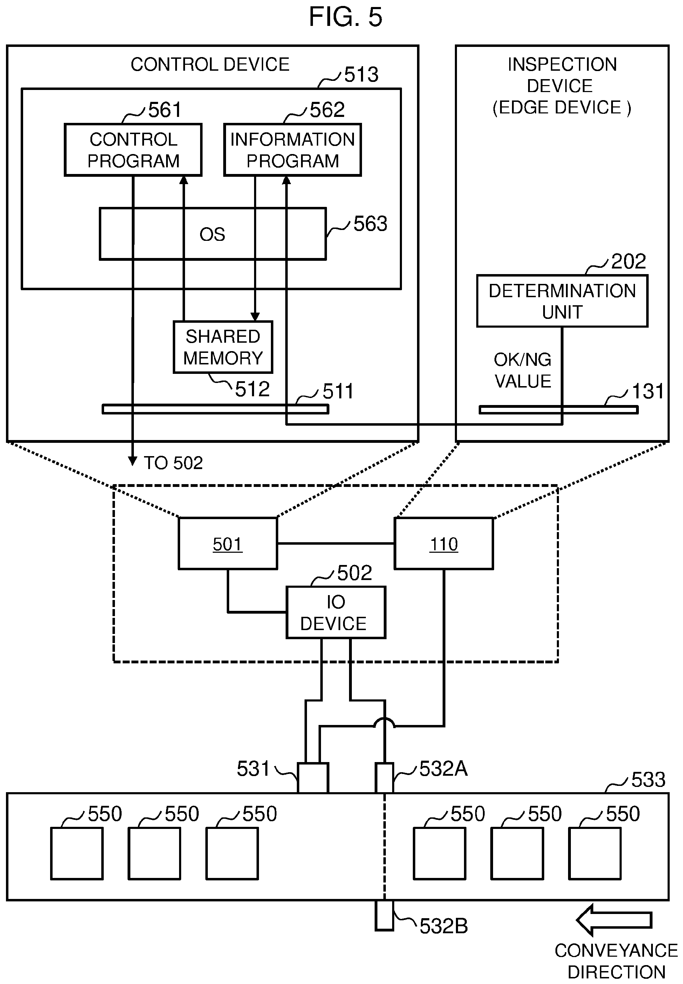

   Fig. 5 illustrates a configuration example of an entire system including an inspection device according to a second embodiment.

### [Description of Embodiments]

In the following description, an "interface device" may be one or more interface devices. The one or more interface devices may be at least one of the following.
- An I/O interface device that is one or more input/output (I/O) interface devices. The I/O interface device is an interface device for at least one of the I/O device and a remote display computer. The I/O interface device for the display computer may be a communication interface device. The at least one I/O device may be any of a user interface device, for example, an input device such as a keyboard and a pointing device, and an output device such as a display device.
- A communication interface device that is one or more communication interface devices. The one or more communication interface devices may be one or more communication interface devices of the same type (for example, one or more network interface cards (NIC)) or two or more communication interface devices of different types (for example, an NIC and a host bus adapter (HBA)).

In the following description, a "memory" is one or more memory devices, and may typically be a main storage device. The at least one memory device in the memory may be a volatile memory device or a nonvolatile memory device.

In the following description, a "persistent storage device" is one or more persistent storage devices. The persistent storage device is typically a nonvolatile storage device (for example, an auxiliary storage device), and is specifically, for example, a hard disk drive (HDD) or a solid state drive (SSD).

In addition, in the following description, a "storage device" may be at least a memory of a memory and a permanent storage device.

In the following description, a "processor" is one or more processor modules. The at least one processor module is typically a microprocessor device such as a central processing unit (CPU), but may be another type of processor device such as a graphics processing unit (GPU). The at least one processor device may be a single core or a multi-core. The at least one processor module may be a processor core.

In addition, in the following description, there is a case where processing is described with a program as a subject, but the subject of the processing may be a processor (alternatively, a device such as a controller having the processor) since the program is executed by the processor to perform defined processing appropriately using a storage device and/or an interface device. The program may be installed in a device such as a computer from a program source. The program source may be, for example, a program distribution server or a computer-readable (for example, non-transitory) recording medium. In the following description, two or more programs may be implemented as one program, or one program may be implemented as two or more programs.

In the following description, processing may be described with a function as a subject, but the function may be implemented by one or more computer programs being executed by a processor. In a case where the function is realized by executing the program by the processor, the determined processing is appropriately performed using the storage device and/or the interface device, and thus, the function may be at least a part of the processor. The processing described with the function as a subject may be processing performed by a processor or a device including the processor. The description of each function is an example, and a plurality of functions may be integrated into one function or one function may be divided into a plurality of functions.

In addition, various objects or services can be set as "inspection target", but in the following embodiment, the inspection target is a product as an example of an object.

The "data of the inspection target" is typically multidimensional data, and specifically, for example, image data or sound data. In the following embodiment, it is assumed that the "data of the inspection target" is image data of a product, particularly, image data of an appearance of a product, and therefore, an inspection device according to the following embodiment is an appearance inspection device.

Fig. 1 illustrates a configuration example of an entire system including an inspection device according to a first embodiment.

An inspection device 110 includes an interface device 131, a storage device 132, and a processor 133 coupled thereto. The inspection device 110 may be a core device (for example, a server device) capable of communicating with a plurality of edge devices (for example, clients) (for example, a cloud computing system based on a cloud infrastructure may be used), but in the present embodiment, the inspection device 110 is an edge device (for example, an information processing terminal such as a personal computer). Since the load of the learning processing is low, even if the inspection device 110 is an edge device, the learning processing of the machine learning model can also be performed by the edge device in addition to the inference processing including the inspection of a product.

The interface device 131 receives image data of a product from a data source 101. The image data is stored in the storage device 132 by the processor 133. The data source 101 may be a camera in the present embodiment, but may be a microphone or an information processing terminal to which a sensing device such as a camera or a microphone is coupled.

The inspection device 110 includes a display device 102 and an input device 103 (for example, a keyboard and a pointing device), and these devices 102 and 103 are coupled to the interface device 131.

The storage device 132 stores an encoder model 141 and a decoder model 142. The encoder model 141 and the decoder model 142 are both machine learning models. The encoder model 141 and the decoder model 142 are, for example, deep learning models, and are specifically neural networks (particularly deep neural networks (DNNs)).

In addition, management data 143 is stored in the storage device 132. The management data 143 may include various data related to learning and inference, for example, at least some of the following.
- Data indicating one or more types of learning parameters to be used and learning end conditions for each of the encoder model 141 and the decoder model 142.
- Data indicating a threshold. The threshold is a value to be compared with the abnormality degree of the product in order to determine whether an OK/NG value to be described later indicates a normal product (OK) or an abnormal product (NG) .
- For each inspection target product in the inference processing (for example, for each product determined as an abnormal product), the image data input to the encoder model 141, the feature amount output from the intermediate layer of the encoder model 141, the abnormality degree output from the encoder model 141, the image data restored by a decoder 203, and the difference image data generated by a difference calculation unit 204.

The storage device 132 stores one or more computer programs. When these computer programs are executed by the processor 133, functions such as a learning unit 151, an inference unit 152, an encoder 201, a determination unit 202, a decoder 203, a difference calculation unit 204, and a visual check unit 205 are implemented. The learning unit 151 performs learning processing including learning of the encoder model 141 and the decoder model 142. The inference unit 152 performs inference processing using the learned encoder model 141 and decoder model 142. The encoder 201 performs encoding processing using the encoder model 141. The determination unit 202 determines whether the product is a normal product or an abnormal product from the abnormality degree of the product. The decoder 203 performs decoding processing using the decoder model 142. The difference calculation unit 204 generates image data indicating a difference between the input image data and the restored image data. The visual check unit 205 causes the user to execute visual check of the image indicated by the data.

The encoder model 141 is a model in which image data of a product (an example of data of the inspection target) is input and an abnormality degree of the product is output. The decoder model 142 is a model in which an OK/NG value, which is a value indicating whether a product is normal or abnormal, and a feature amount of image data of the product are input, and in a case where the input OK/NG value indicates an abnormality, restored data of the product based on the input feature amount is output. In this manner, the learning of the encoder model 141 and the decoder model 142 can be different and independent from each other. Since not all the image data input to the encoder model 141 is restored, it is possible to reduce the load of processing related to the machine learning model used for inspection of the product. Note that the learning parameter includes a learning rate, a learning rate attenuation of each update, a batch size, the number of epochs, a batch size, and the like, and at least one or more of them is used at the time of learning. The learning parameter of the encoder model 141 and the learning parameter of the decoder model 142 may be different. The "learning parameter" may be a set of a parameter item and a parameter value. Therefore, "the learning parameters are different" may be that the parameter items are different, the parameter items are the same and the parameter values are different, or they may be mixed.

Fig. 2 illustrates an outline of a flow of inference processing.

The encoder model 141 includes an input layer 211, two sequential intermediate layers 213A and 213B, and an output layer 215. The number of intermediate layers 213 may be more or less than 2. Although not illustrated, the decoder model 142 also includes an input layer, one or more intermediate layers, and an output layer. Furthermore, in the inference processing, the image data input to the encoder model 141, the feature amount output from the intermediate layer 213 (the intermediate layer 213B in the present embodiment) of the encoder model 141, and the abnormality degree output from the encoder model 141 may be included in the management data 143 for each inspection target product in the inference processing.

The inference unit 152 receives image data 210 of the product. The encoder 201 performs encoding processing using the encoder model 141. The encoding processing includes inputting the image data 210 to the input layer 211, calculating the feature amount of the image data 210 in the intermediate layers 213A and 213B, and outputting the abnormality degree of the product from the output layer 215 based on the feature amount output from the final intermediate layer 213B.

The determination unit 202 determines whether the abnormality degree output from the encoder 201 is equal to or greater than a threshold indicated by the management data 143. The determination unit 202 outputs a value indicating the determination result as an OK/NG value. When the abnormality degree is equal to or greater than the threshold, the OK/NG value is "1" (indicating NG), and when the abnormality degree is less than the threshold, the OK/NG value is "0" (indicating OK) .

The decoder 203 performs decoding processing using the decoder model 142. The decoding processing includes inputting an OK/NG value to the decoder model 142, inputting a feature amount output from the final intermediate layer 213B to the decoder model 142, and, if the input OK/NG value indicates NG, restoring the image data of the product based on the input feature amount and outputting the restored image data. When the OK/NG value input to the decoder model 142 indicates OK, the decoder 203 does not restore the image data based on the input feature amount.

The difference calculation unit 204 generates difference image data (an example of difference data indicating a difference) that is image data indicating a difference between the input image data 210 and the restored image data (image data output from the decoder 203). For example, the image data is data of a photographed image of an appearance of a product, and the difference image data is image data in which an abnormal part such as a flaw of the product is emphasized. Specifically, for example, since the decoder model 142 is learned to restore the image data of the normal product from the feature amount of the image data of the abnormal product, in the inference processing, the image data restored based on the feature amount of the image data of the abnormal product is image data similar to the image data of the normal product. Therefore, in a case where the input image data of the abnormal product is compared with the restored image data, when there is an abnormal part such as a flaw in the image indicated by the input image data, the abnormal part is detected as a difference, and as a result, it is possible to generate difference image data in which the abnormal part is emphasized.

The visual check unit 205 displays an inspection result based on the difference image indicated by the generated difference image data on the display device 102, and receives an answer to the inspection result from the user. For example, the visual check unit 205 displays, on the display device 102, a user interface (UI) displaying an inspection result and acceptance in answer as to whether the product is a normal product, and accepts the answer as to whether the product is a normal product via the UI. The displayed inspection result may include a difference image, and may further include an input image (an image indicated by the input image data). The user visually checks the displayed inspection result and inputs an answer as to whether the product is a normal product to the UI. In a case where the answer indicates that the product is a normal product, in the learning processing after the inference processing, the visual check unit 205 specifies the abnormality degree corresponding to the product from, for example, the management data 143. In the learning processing after the inference processing, the determination unit 202 inputs the specified abnormality degree (abnormality degree of the normal product) to the determination unit 202 as a feedback value.

The encoder model 141 is a neural network including a plurality of sequential intermediate layers 213. The learning unit 151 performs learning processing, and in the learning processing, the feature amount input to the decoder model 142 is a feature amount output from the last layer of the plurality of intermediate layers 213. Since the feature amount of the last layer of the plurality of intermediate layers 213 is the feature amount having the smallest data size, the load of learning of the decoder model 142 can be reduced.

In addition, the image data is restored only in a case where the OK/NG value input to the decoder model 142 indicates NG. As a result, the load of the inference processing is reduced. In addition, the frequency with which the user has to perform visual check is reduced, and as a result, the burden on the user is also reduced.

An example of learning in the present embodiment is as follows.

The learning of the encoder model 141 includes one or more DNNs. In the generation (learning) of the encoder model 141, data of each image of a plurality of images (for example, a plurality of normal images and a plurality of abnormal images (images that are not normal images)) is used as training data of the learning. One or a plurality of learning parameters (parameter items and parameter values) of the learning are determined by the user according to a requirement that sufficient accuracy is obtained, occurrence of over-learning is avoided, or the like. For example, the number of epochs, the learning rate, and the parameter value of the learning rate attenuation of each update may be different according to a requirement. The batch size may be determined according to hardware specifications of the inspection device 110.

In the generation (learning) of the decoder model 142, a feature amount from the intermediate layer 213 of the encoder model 141 (a feature amount of training data input to the decoder model 142) is used as training data. The feature amount as the training data may be a feature amount of the normal image data input to the decoder model 142. The decoder model 142 for image restoration is generated (learned) from the feature amount. The number of pieces of training data (the number of pieces of feature amount data) used for learning of the decoder model 142 may be the same as or different from the number of pieces of training data used for learning of the encoder model 141. Furthermore, similarly to the encoder model 141, one or more learning parameters of the decoder model 142 may be determined according to requirements and hardware specifications of the inspection device 110. Furthermore, since the encoder model 141 and the decoder model 142 can learn independently, learning parameters (for example, parameter values of the learning rate and the number of epochs, or other learning parameters) of learning of the models 141 and 142 may be different.

The encoder model 141 is a model that outputs the abnormality degree of the product, and the decoder model 142 is a model that restores and outputs the image data of the product in a case where the OK/NG value determined based on the abnormality degree of the product indicates the abnormality degree. Therefore, the processing load is reduced as compared with the case where restoration is performed for all the image data input to the encoder model 141.

The abnormality degree is input to the determination unit 202, and an OK/NG value based on the abnormality degree is output from the determination unit 202. The relationship between the abnormality degree and the OK/NG value depends on a threshold to be compared with the abnormality degree. In the learning processing, the threshold is determined as described with reference to Figs. 3 and 4.

Fig. 3 illustrates an example of distribution of abnormality degrees of a normal product and an abnormal product. Fig. 4 illustrates a processing flow of the determination unit 202.

In the learning processing, a plurality of pieces of image data of the normal products and a plurality of pieces of image data of the abnormal products are input to the encoder model 141 as the training data. The image data of the normal product is an example of the normal data, and the image data of the abnormal product is an example of the abnormal data. The "abnormal product" in the learning processing is not limited to a product having an abnormal part, and may be an object other than the product.

Although the abnormality degree varies between the normal product and the abnormal product, the abnormality degree of the normal product is lower than that of the abnormal product as a whole.

The threshold of the abnormality degree may be determined on the basis of an average value as an example of the statistical value of the abnormality degree of the normal product, but is determined as follows in the present embodiment.

That is, in the learning processing, the learning unit 151 includes the statistics of the abnormality degree and the frequency in the management data 143 for each piece of image data of the normal product. In the learning processing, the learning unit 151 includes the statistics of the abnormality degree and the frequency in the management data 143 for each piece of image data of the abnormal product.

In the learning processing, the determination unit 202 calculates a median value of the variance of the abnormality degree from the relationship between the abnormality degree and the frequency for the normal product, and calculates DT which is a value as a distance from the median value. DT is an example of a first distance, and is the maximum distance between the median value of the abnormality degree of the normal product and the abnormality degree of the normal product. The determination unit 202 determines a threshold of the abnormality degree based on DT and includes the threshold in the management data 143.

In the inference processing, the determination unit 202 outputs a value indicating whether the abnormality degree output from the encoder model 141 (encoder 201) is equal to or greater than a threshold to the decoder model 142 (decoder 203) as an OK/NG value.

As described above, the output value from the encoder model 141 (here, the high-dimensional feature amount such as the abnormality degree) does not become the input value of the decoder model 142 as it is, but the output value from the encoder model 141 is converted into a scalar value that can be expressed by 1 bit, such as an OK/NG value, and is output to the decoder model 142. This contributes to reducing the load of the learning processing by separately learning the encoder model 141 and the decoder model 142.

In the learning processing, the determination unit 202 calculates an index based on the variation in the abnormality degree output from the encoder model 141 for each of the plurality of pieces of image data of the normal product, and determines the threshold of the abnormality degree based on the index. Therefore, the threshold is expected to be an appropriate value.

In a case where the threshold is not set (unlearned), the OK/NG value becomes an NG value (value indicating NG) when the abnormality degree is zero or more, and becomes an OK value (value indicating OK) when the abnormality degree is less than zero. That is, the abnormality degree of the normal product is zero or less. In the present embodiment, the index serving as the base of the threshold is the maximum distance DT from the median value of the variance of the abnormality degree of the normal product to the abnormality degree of the normal product. As a result, the threshold becomes an appropriate value according to the position of the median value of the distribution of the normal values in the abnormality degree distribution. The minimum value and/or the maximum value of the abnormality degree of the normal product may be a predefined value, or may be a value determined by the determination unit 202 based on the distribution of the abnormality degree (abnormality degree statistics) obtained in the learning processing (the same applies to the minimum value and/or the maximum value of the abnormality degree of the abnormal product).

In the inference processing, for example, every time an OK/NG value indicating NG is output from the determination unit 202, the abnormality degree compared with the threshold, the restored image data, and data indicating a visual check answer (answer as to whether the product is a normal product or an abnormal product) are included in the management data 143. In the present embodiment, the visual check is performed only in a case where the OK/NG value indicates NG, but as a result of the visual check, an answer that the product is a normal product can be input. In the learning processing after the inference processing, as described above, the determination unit 202 specifies the abnormality degree corresponding to the answer that the product is a normal product from the management data 143, and inputs the specified abnormality degree (abnormality degree of the normal product) to the determination unit 202 as a feedback value. That is, the feedback value is the abnormality degree of the normal product in a case where the OK/NG value becomes a value indicating NG although the image data input to the encoder model in the inference processing is the image data of the normal product. The determination unit 202 calculates DT based on the feedback value, and updates the threshold based on the calculated DT. As a result, the threshold can be set to a more appropriate value based on the feedback value in the inference processing. Note that the feedback value may be used for updating the threshold itself instead of or in addition to the calculation of DT. In other words, the threshold may be directly updated based on the feedback value (or may be updated without calculating an index such as DT based on the feedback value), or may be indirectly updated (an index such as DT may be calculated based on the feedback value, and the threshold may be updated based the calculated index.).

In the learning processing, the determination unit 202 may calculate DF as an example of an index based on the variation in the abnormality degree output from the encoder model 141 for each of the plurality of pieces of image data of the abnormal product for the abnormal product. DF is an example of a second distance, and is a value as the maximum distance of the abnormality degree from the median value of the variance of the abnormality degree for the abnormal product. In the learning processing, the learning unit 151 may adopt DT < DF (DT is smaller than DF) as a learning end condition of the encoder model 141. That the condition of DT < DF is satisfied for the encoder model 141 means that the encoder model 141 has been correctly generated (learned). For this reason, in the learning processing, the output abnormality degree is expected to be appropriate, and thus, an appropriate threshold is expected to be set. As a result, it is expected to reduce the frequency of erroneous determination of an abnormal product as a normal product. Note that the determination as to whether DT < DF is satisfied may be performed after learning using a predetermined number of pieces of image data is performed.

In addition, since the threshold used in the determination unit 202 is learned to be an appropriate value as described above, the possibility that the OK/NG value erroneously becomes a value indicating NG in the inference processing even though the inspection target is a normal product is reduced. Therefore, the possibility that the image data is restored by the decoder 203 is reduced, and as a result, the processing load is expected to be reduced.

### [Second Embodiment]

A second embodiment will be described. At that time, differences from the first embodiment will be mainly described, and description of common points with the first embodiment will be omitted or simplified.

Fig. 5 illustrates a configuration example of the entire system including the inspection device according to the second embodiment.

The interface device 131 of the inspection device 110 is coupled to a control device 501 (an interface device 511 of the control device 501) that controls one or a plurality of control target devices. The inspection device 110 and the control device 501 may communicate with each other by, for example, TCP/IP.

The control device 501 includes an interface device 511, a storage device including a shared memory 512, and a processor 513 coupled to the interface device 511 and the storage device. A conveyance device (for example, a device that drives the conveyor belt 533) for the product 550 can be employed as a control target device.

An input/output (I/O) device 502 is coupled to the interface device 511 of the control device 501. A device such as a peripheral device, a peripheral device or another control target device is coupled to the I/O device 502. These devices are input and output from the control device 501 via the I/O device 502. The peripheral device may be a device such as a camera 531 for photographing the product 550 or optical sensors 532A and 532B for detecting the product 550. The inspection device 110 may be coupled to the I/O device 502 instead of or in addition to the interface device 511 of the control device. The inspection device 110 may be coupled to the camera 531.

The processor 513 of the control device 501 executes an operating system (OS) 563, and executes a control program 561 and an information program 562 that operate on the OS 563. The OS 563 may be a real-time general-purpose OS (OS having a real-time function capable of providing required real-time property although being a system of general-purpose OS for information processing), and the execution timing of the control program 561 and the information program 562 may be controlled by the real-time general-purpose OS. Alternatively, the execution timing of the control program 561 and the information program 562 may be controlled by runtime software.

The control program 561 is a program that performs scan processing, which is processing for controlling the control target device and has real-time properties, within the control cycle for each control cycle defined for the control program 561. The information program 562 is a program that performs information processing defined for the information program 562.

The shared memory 512 is a shared memory for the control program 561 and the information program 562, and includes a control area in which data is written from the control program 561 and an information area in which data is written from the information program 562. The information area is smaller than the control area.

In the second embodiment, for example, the following processing is performed.

When the control program 561 detects the product 550 on a conveyor belt 533 through the optical sensors 532A and 532B, the camera 531 is caused to execute photographing. As a result, an image of the product 550 detected through the optical sensors 532A and 532B is captured, and data of the captured image is input from the camera 531 to the inspection device 110 via or not via the control device 501. The inference unit 152 of the inspection device 110 performs inference processing on the image data. In the inference processing, the determination unit 202 outputs the OK/NG value to the control device 501 in addition to the decoder 203. The information program 562 receives the OK/NG value and writes the OK/NG value in the information area of the shared memory 512. Since the OK/NG value has a small size, there is no problem in that the write destination of the OK/NG value is an information area smaller in size than the control area. The control program 561 reads the OK/NG value from the information area and controls at least one control target device based on the OK/NG value. For example, there is an exclusion device that excludes the photographed product 550 from the conveyor belt 533 as the control target device, and the control program 561 causes the exclusion device to exclude the photographed product 550 from the conveyor belt 533 in a case where the read OK/NG value indicates NG. As the control based on the OK/NG value, instead of excluding the product 550 or other processing may be performed.

The control device 501 may be an industrial control device. The control target device may be, for example, an industrial device such as an industrial motor or a compressor. The control device 501 may be a main arithmetic device of the control system, and the inspection device 110 may be an arithmetic device as an extension device in the control system. Functions such as the learning unit 151, the inference unit 152, the encoder 201, the determination unit 202, the decoder 203, the difference calculation unit 204, and the visual check unit 205 described above may be realized by executing the information program in the arithmetic device as the extension device.

Although some embodiments have been described above, these are examples for describing the present invention, and it is not intended to limit the scope of the present invention only to these embodiments. The present invention can be implemented in various other forms.

### [Reference Signs List]

- 110: Inspection device
- 131: Interface device
- 132: Storage device
- 133: Processor
- 141: Encoder model
- 142: Decoder model

## Claims

1. An inspection device comprising:
an interface device that receives data of an inspection target;
a storage device that stores an encoder model and a decoder model, each of which is a machine learning model; and
a processor that is coupled to the interface device and the storage device, wherein
the processor is configured to perform learning processing including learning the encoder model and the decoder model and inference processing including inspecting the inspection target by using the learned encoder model and decoder model,
the encoder model is a model that receives data of the inspection target as an input and outputs an abnormality degree of the inspection target, and
the decoder model is a model in which an OK/NG value that indicates whether the inspection target is normal or abnormal and that is a value determined based on the abnormality degree and a feature amount of data of the inspection target are input, and in a case where the input OK/NG value indicates an abnormality, restored data of the inspection target is output based on the input feature amount.

2. The inspection device according to claim 1, wherein
in the inference processing, the processor outputs a value indicating whether an abnormality degree output from the encoder model is equal to or larger than a threshold as a value indicating whether the inspection target is normal or abnormal.

3. The inspection device according to claim 2, wherein
in the learning processing,
each of a plurality of pieces of normal data is input to the encoder model,
each of the plurality of pieces of normal data is data of a normal target,
the processor determines a threshold of an abnormality degree on a basis of an index based on a variation in the abnormality degree output from the encoder model for each of the plurality of pieces of normal data, and
the determined threshold is the threshold in the inference processing.

4. The inspection device according to claim 3, wherein
the index is a first distance, and
the first distance is a maximum distance from a median value of variance of abnormality degree for normal data to an abnormality degree for normal data.

5. The inspection device according to claim 3, wherein
in the learning processing after the inference processing,
the threshold is updated based on a feedback value, and
the feedback value is an abnormality degree of a product corresponding to normal data in a case where the OK/NG value becomes a value indicating an abnormality even though data input to the encoder model in the inference processing is the normal data.

6. The inspection device according to claim 5, wherein
a display device is coupled to the interface device,
in the inference processing, in a case where the restored data is output from the encoder model, the processor calculates a difference between the restored data and data that corresponds to the restored data and is input to the encoder model, displays an inspection result based on the difference on the display device, and receives an answer to the inspection result from the user, and
in a case where the answer indicates that the product is normal, the feedback value is an abnormality degree of a product corresponding to the input data.

7. The inspection device according to claim 6, wherein
data of the inspection target is data of a photographed image of the inspection target.

8. The inspection device according to claim 1, wherein
the encoder model is a neural network including a plurality of sequential intermediate layers, and
in the learning processing, the feature amount input to the decoder model is a feature amount output from a last layer of the plurality of intermediate layers.

9. The inspection device according to claim 1, wherein
the interface device is coupled to a control device that controls one or a plurality of control target devices,
the control device executes a control program and an information program, and includes a shared memory for the control program and the information program,
the control program is a program that performs scan processing, which is processing for controlling a control target device and has real-time properties, within a control cycle for each control cycle defined for the control program,
the information program is a program that performs information processing defined for the information program,
the shared memory includes a control area that is an area, in which data is written from the control program, and an information area that is an area, in which data is written from the information program,
the information area is smaller than the control area,
the processor outputs the OK/NG value to the control device through the interface device,
in the control device,
the information program writes the OK/NG value in the information area, and
the control program reads the OK/NG value from the information area and controls at least one control target device based on the OK/NG value.

10. The inspection device according to claim 1, wherein
a learning parameter of the encoder model is different from a learning parameter of the decoder model,
a learning parameter is a set of a parameter item and a parameter value for each learning parameter, and
a feature in which the learning parameters are different means that parameter items are different and/or that parameter items are same but parameter values are different.

11. The inspection device according to claim 4, wherein
the processor terminates learning of the encoder model in a case where the first distance is less than a second distance, and
the second distance is a maximum distance from a median value of variance of an abnormality degree for abnormal data to an abnormality degree for abnormal data.

12. An inspection method comprising:
performing learning processing including learning an encoder model and a decoder model, each of which is a machine learning model; and
performing inference processing including inspecting an inspection target by using a learned encoder model and a learned decoder model, wherein
the encoder model is a model that receives data of the inspection target as an input and outputs an abnormality degree of the inspection target, and
the decoder model is a model in which an OK/NG value that is a value indicating whether the inspection target is normal or abnormal and a feature amount of data of the inspection target are input, and in a case where the input OK/NG value indicates an abnormality, restored data of the inspection target based on the input feature amount is output.
